# EUROPEAN PATENT SPECIFICATION

(11) **EP 3 164 288 B1**
(45) Date of publication and mention of the grant of the patent: **11.07.2018**
(21) Application number: 15733737.9
(22) Date of filing: 02.07.2015
(51) Int. Cl.: B60K 15/04

(54) **REMOVAL PREVENTION DEVICE FOR ANTI-SIPHONING DEVICES FOR TANKS**
ENTFERNUNGSVERHINDERUNGSVORRICHTUNG FÜR ABSAUGSCHUTZVORRICHTUNGEN FÜR TANKS
DISPOSITIF DE PRÉVENTION D'ENLÈVEMENT POUR DISPOSITIFS ANTI-SIPHONS POUR RÉSERVOIRS

(30) Priority: 04.07.2014 IT TV20140098
(43) Date of publication of application: 10.05.2017
(73) Proprietor: Lago Accessori S.r.l., 35014 Fontaniva (PD) (IT)
(72) Inventor: LAGO, Fabio, I-35013 Cittadella (IT); LAGO, Giovanni, I-35014 Fontaniva (IT)
(74) Representative: Modiano, Micaela Nadia
(86) International application number: PCT/EP2015/065065
(87) International publication number: WO 2016/001346

(56) References cited:
- EP-A1- 2 165 874

## Description

The present invention relates to a removal prevention device for anti-siphoning devices for tanks.

Nowadays it is known to provide tanks for motor vehicles which are substantially constituted by very capacious containers into which the insertion of the fuel is done by way of an adapted inlet.

Such tanks are usually arranged adjacent to the chassis of the vehicle, at preset heights both from the ground and from the loading surface, in a sheltered area, usually in the space between two wheel axles.

In conventional tanks there is the problem of preventing the drawing- off for example of Diesel fuel; thus, solutions of the mechanical type are known, in which it is sought substantially to reduce to the minimum the cross-section of entry to the tank in order to obstruct the introduction into it of flexible tubes for extracting the fuel.

In such conventional solutions it is sought to prevent access to the tank by using a tube, which is arranged between the entry point of the refueling inlet and the inside of the tank proper, and which contains a perforated metallic net or a "'cobweb" of baffles, which are arranged on multiple levels and mutually offset.

These solutions, which therefore consist substantially of using a mechanical obstruction, although they provide a sufficient level of barring, also make it difficult to get liquid into the tank, for example Diesel fuel, when refueling, given that the Diesel fuel is forced to be deviated and turned back in several directions, in a chaotic manner and not in the direction of flow, thus forcing the person carrying out the refueling to choke the flow of fuel, increasing the time necessary to conclude the filling of the tank, so as to avert the sudden release of the nozzle by the intervention of the safety valve of the nozzle, and the interruption of the flow.

Furthermore if the barrier system against extracting Diesel fuel is arranged on the bottom of the tube of the inlet of the anti-siphoning device fitted on the tank, such tube will be submerged completely once the tank has been filled with fuel.

In this case, once the cap of the tank is unscrewed it is possible to easily extract the Diesel fuel comprised between the surface of the liquid and the bottom of the tube.

Considering that some tanks have a very large footprint in plan view, which generates capacities of as much as 1000 liters, it is easy to see that a few centimeters of Diesel fuel multiplied by the horizontal surface of the fuel contained in the tank translates to in many dozens of liters of fuel that can be easily removed.

A further problem is constituted by the necessity to connect the anti-siphoning device fitted with the obstruction to the mouth of the tank; the conventional coupling systems involve either the use of metallic elements to be deformed, such as for example metallic tongues, or perforation and riveting of an anti-theft ring onto the tank body.

All such conventional systems require operations of more or less long times and special equipment, and they still allow ill-intentioned individuals, properly equipped, to remove the device. The generic document EP 2 165 874 discloses a connection and removal prevention device for connecting an antitheft device to a fuel tank to which an end adapter for introducing fuel is welded, comprising means adapted to allow, once the antitheft device has been inserted and partially rotated within the tank, non-removable interconnection with respect to the adapter.

The aim of the present invention is therefore to resolve the above mentioned technical problems, eliminating the drawbacks in the cited known art, by devising a device that can be associated with an anti-siphoning device for conventional tanks while at the same time making it possible to prevent the fraudulent removal thereof therefrom.

Within this aim an object of the invention is to provide a device that can be associated with and at the same time rapidly and easily removed from an anti-siphoning device for conventional tanks.

Another object is to provide a device according to the invention that is structurally simple and is low cost.

This aim and these and other objects which will become better apparent hereinafter, are achieved by a removal prevention device for anti-siphoning devices for tanks, which comprises a second ring which is provided with an axial tube and with which a third ring can be associated which can be coupled to said tank, characterized in that said second ring has an annular guide, concentric to said axial tube, on which at least one slider slides, oscillating with respect to a pivot associated with said third ring, there being, adjacent to said annular guide, at least one first seat for the temporary engagement of said at least one slider and at least one second seat for an elastically deformable element which protrudes within said annular guide, one or more screws being associated radially with said second ring and affecting or not affecting said annular guide.

Further characteristics and advantages of the invention will become better apparent from the detailed description of a particular, but not exclusive, embodiment, which is illustrated by way of non-limiting example in the accompanying drawings wherein:

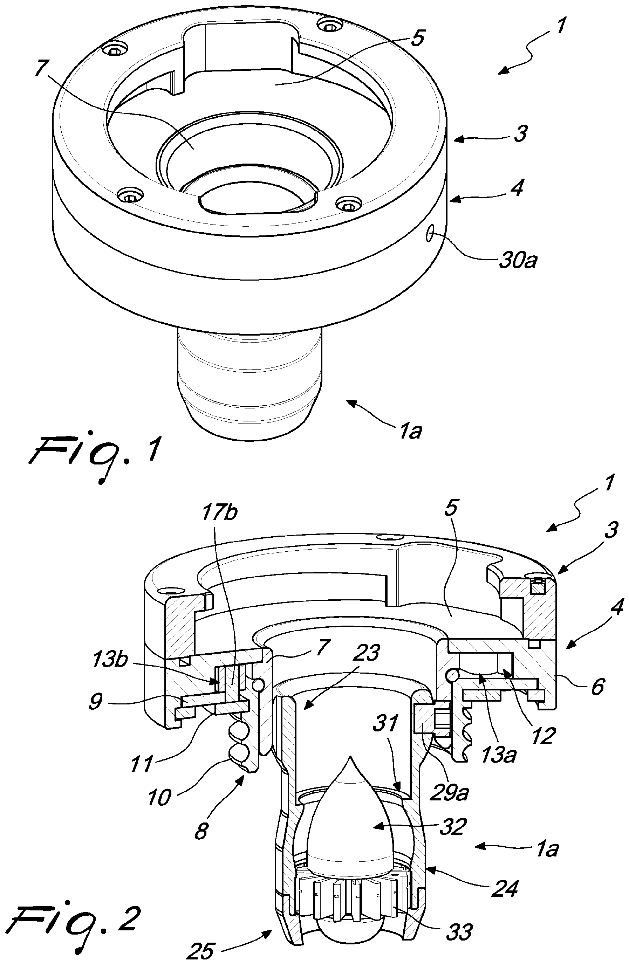

Figure 1 is a perspective side view of the removal prevention device applied to an anti-siphoning device for tanks;
Figure 2 is a partially sectional perspective side view of the device;

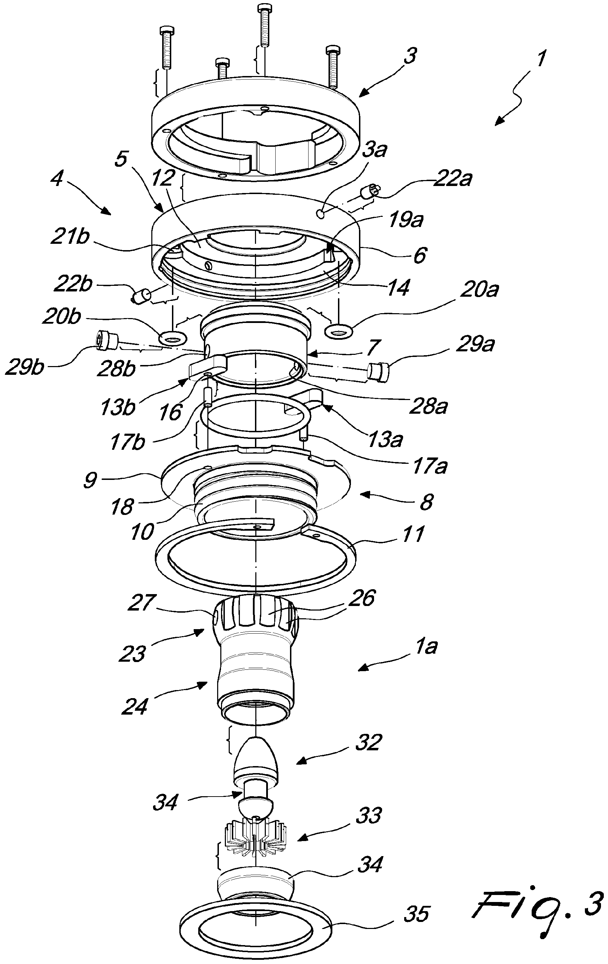

Figure 3 is an exploded view of the removal prevention device applied to an anti-siphoning device;

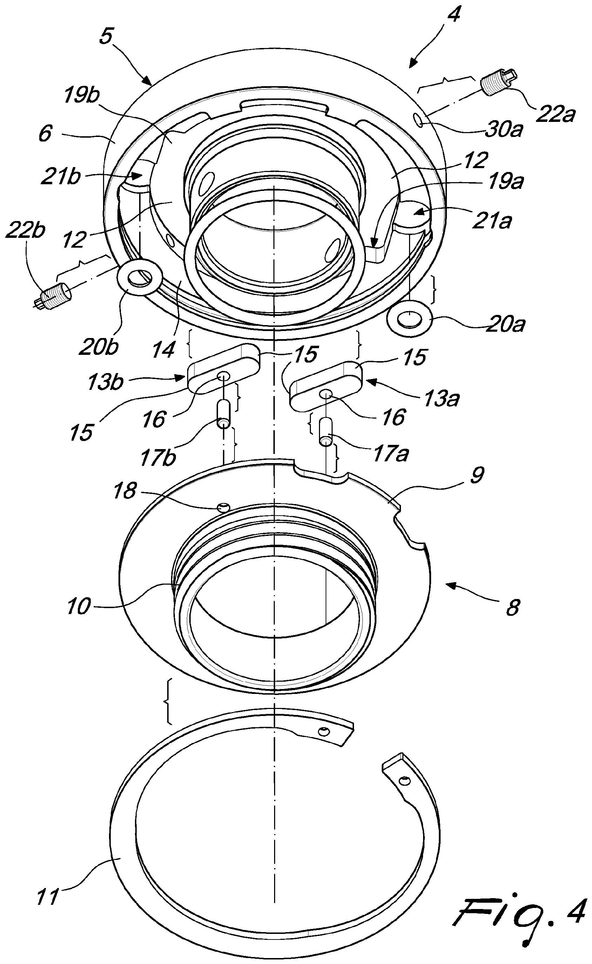

Figure 4 is a perspective side view of the removal prevention device;

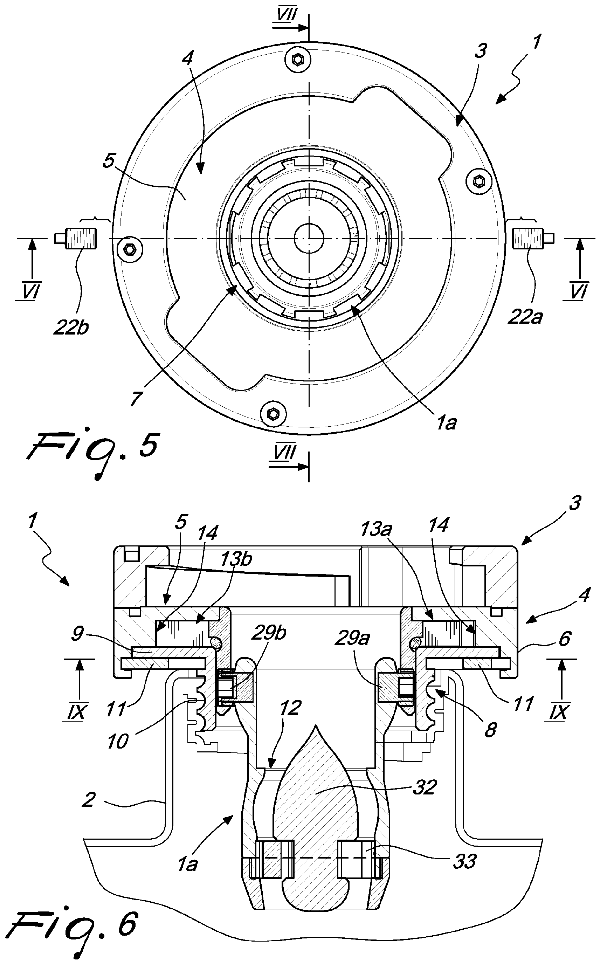

Figure 5 is a view from above of the removal prevention device applied to an anti-siphoning device;
Figure 6 is a sectional view of the removal prevention device taken along the line VI-VI in Figure 5;

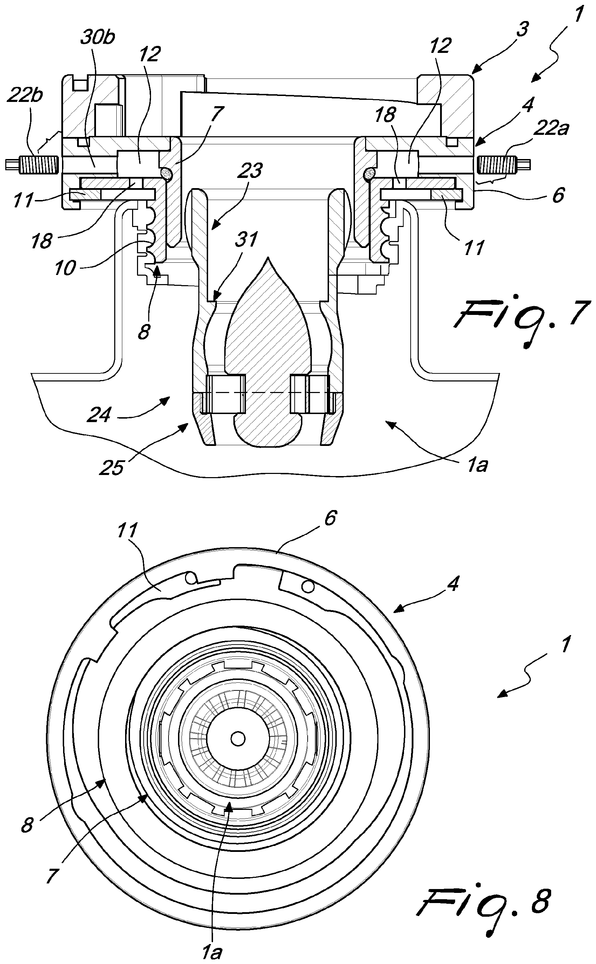

Figure 7 is a sectional view of the removal prevention device taken along the line VII-VII in Figure 5;
Figure 8 is a view from below of the removal prevention device applied to an anti-siphoning device;

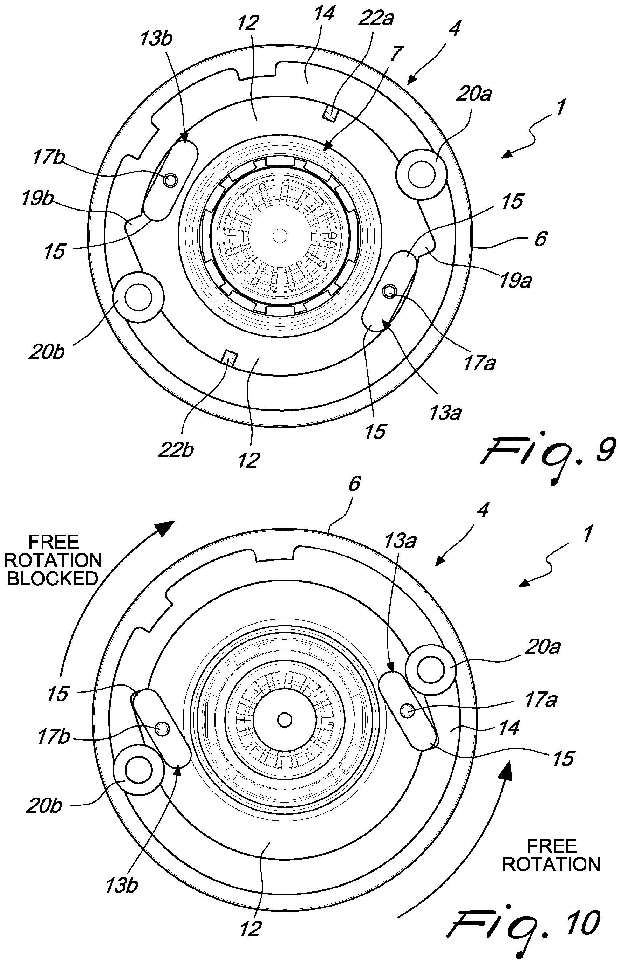

Figure 9 is a sectional view of the removal prevention device applied to an anti-siphoning device, taken along the line IX-IX in Figure 6;
Figure 10 is a view, similar to Figure 9, of the removal prevention device applied to an anti-siphoning device with the sliders arranged in a different position.

In the embodiments illustrated, individual characteristics shown in relation to specific examples may in reality be interchanged with other, different characteristics, existing in other embodiments.

Moreover, it should be noted that anything found to be already known during the patenting process is understood not to be claimed and to be the subject of a disclaimer.

With reference to the figures, the reference numeral 1 generally designates a removal prevention device which is applied to a conventional anti-siphoning device 1a for tanks 2 of vehicles of the type with a vertical or oblique connector.

The removal prevention device 1 comprises a first ring 3, which is usually used as an interconnection element to a cap, which, in the specific embodiment shown, is annular and is perforated axially; such ring is associated, or rendered integral so as to constitute a single element, with an underlying second ring 4, which is substantially T-shaped in cross-section, perforated axially and provided with a first head 5 from the perimetric rim of which a wall 6 and an axial tube 7 protrude, on the opposite side with respect to the first ring 3.

The first ring 3 may be substituted by a cap or by a valve or by any other means adapted to close the entry port of the device 1.

A T-shaped third ring 8 is associated with the second ring 4 and comprises therefore a second head 9 which can be associated internally, for example by screwing or by fixing in a bayonet-like manner, with the wall 6, and an externally threaded stem 10 which is arranged concentrically and externally to the axial tube 7.

Alternatively, in a possible variation of construction, a tank inlet with an internal thread instead of external can be used; in this case the third ring 8 will have a stem 10 of greater diameter and be threaded internally.

The third ring 8 is kept associated with the second ring 4 by way of a retaining ring or "C-clip" 11 in elastic steel.

The set of the first ring 3, second ring 4, and third ring 8 can thus be coupled to the tank 2.

The second ring 4 has, at the inner surface of the first head 5 which is directed toward the third ring 8, an annular guide 12 on which, in the specific embodiment shown, a pair of sliders 13a, 13b slide.

Concentrically and externally with respect to the annular guide 12, an annular ridge 14 protrudes from the inner surface of the first head 5; this forms, together with the outer lateral surface of the axial tube 7, a guided path within which each one of the sliders 13a, 13b can lie.

Each one of the sliders 13a, 13b is substantially shaped like a parallelepiped with a modest length and a width that is smaller than that of the annular guide 12 and with rounded ends 15; a first through hole 16 is provided in each slider at right angles to the surface that slides on the annular guide 12 and acting as a seat for a pivot 17a, 17b for the pivoting of the sliders at adapted second holes 18 which are provided at the underlying flat surface of the second head 9 of the third ring 8.

Each one of the sliders 13a, 13b is therefore allowed to oscillate at the annular guide 12 so that the respective ends 15 can be kept adjacent to the annular ridge 14 or one of them can be distanced from it and be arranged adjacent to the outer lateral surface of the axial tube 7.

A pair of first seats 19a, 19b are provided at the inner lateral surface of the annular ridge 14 for the temporary engagement of one of the ends 15 of the sliders 13a, 13b.

The shape of the pair of first seats 19a, 19b is such that an end 15 of the sliders 13a, 13b is forced into them following a clockwise rotation imparted to the second ring 4.

A pair of elastically deformable elements 20a, 20b contribute to forcing the placement of the ends 15 of the sliders 13a, 13b into the first seats 19a, 19b and are constituted by rings made of plastic material which can be accommodated at adapted second seats 21a, 21b which are provided at the annular ridge 14 in a region that is adjacent to the first ends 15.

The shape structure of the second seats 21a, 21b and of the elastically deformable elements 20a, 20b is such that these latter items, once inserted into the second seats 21a, 21b, protrude from them so as to affect part of the space that lies above the annular guide 12 on which the sliders slide.

Upon a counterclockwise rotation of the second ring 4, the pair of sliders which is pivoted to the third ring 8 is free to slide at the annular guide 12 despite the presence of the elastically deformable elements 20a, 20b.

Upon a clockwise rotation of the second ring 4, on the other hand, the presence of the elastically deformable elements 20a, 20b forces an end 15 of each slider 13a, 13b to be arranged towards the inner lateral surface of the annular ridge 14 until it affects one of the first seats 19a, 19b, thus blocking a further rotation.

One or more screws 22a, 22b, of the type that advantageously have a proprietary head, and which have a length such that they can arrange one of their ends beyond the annular ridge 14 so as to thus affect the space of the annular guide 12, are furthermore associated radially, at third holes 30a, 30b, at the outer lateral surface of the second ring 4: in this case the screws prevent any and all rotation of the second ring 4 in that they interact with the sliders 13a, 13b, blocking the sliding thereof.

Concentrically to and inside the axial tube 7, the first end 23 of a duct 24, which protrudes with its second end 25 within the tank 2, can be arranged and is associated rotatably.

The duct 24 is substantially cylindrical and a plurality of axial slots 26, which are adapted to allow the venting of the air from the tank 2, are provided at the outer lateral surface of the first end 23.

At the first end 23 of the duct 24 there is, along the same transverse axis, a pair of fourth holes 27.

At the end tip of the axial tube 7 there is, along the same transverse axis, a pair of fifth holes 28a, 28b.

Once the duct 24 has been positioned with respect to the axial tube 7, the pair of fourth and fifth holes 27, 28a, 28b are mutually axially aligned so as to allow the placement of a pair of pivots 29a, 29b which allow the rotatable connection of the duct 24 to the axial tube 7.

The duct 24 can thus oscillate with respect to the axial tube 7 by a desired angle.

Inside the duct 24 there is, between the first and second ends 23, 25, a step 31 which constitutes an abutment for the end of the dispensing duct of a nozzle of the fuel pump once it is arranged inside the device 1.

An ogive 32 is associated inside the second end 25 of the duct 24 and is adapted to guide and direct the flow of the fuel according to a fluid stream.

To this end the cross-section of the inner lateral surface of the second end 25 of the duct 24 is slightly curved.

The ogive 32 is provided in a downward region with means which are adapted to space the ogive 32 apart from the inner lateral surface of the duct 24 and which are adapted to prevent the insertion of tubes to draw fuel; the means are constituted by a flat spring 33 which is folded in a zigzag arrangement and is then wound at an annular slot 34 which is provided in a downward region with respect to the ogive 32 and abuts against the inner lateral surface of the duct 24.

Advantageously, in order to allow the maintenance of the spring 33 if desired, the second end 25 of the duct 24 is detachably associable with a dome 34 for supporting and containing the spring 33.

Finally, a gasket 35 can be associated coaxially with the stem 10 of the third ring 8.

Use of the invention is therefore the following: once the removal prevention device 1 is associated with the anti-siphoning device 1a, upon a counterclockwise rotation of the second ring 4 the pair of sliders which is pivoted to the third ring 8 is free to slide at the annular guide 12.

A clockwise rotation, for screwing the device to an inlet for inserting the fuel, is allowed by the fact that the sliders 13a, 13b enter the seats 19a, 19b assisted by the elastic bodies 20a, 20b, thus locking the rotation of the third ring 8, which is threaded with respect to the whole of the rest of the device; the effect is that by rotating the anti-siphoning device, the assembly of the first ring, the second ring and the third ring makes a single body and the device is screwed to the inlet.

An anticlockwise rotation, in order to unscrew the device from the inlet for inserting the fuel, can be achieved only by authorized personnel who must be equipped with adapted means.

In fact such anticlockwise rotation is not allowed, because the sliders 13a, 13b, by not engaging in the seats 19a, 19b, thanks to their arrangement, can allow a free rotation of the device with respect to the second ring 8, thus preventing the unscrewing thereof by ill-intentioned individuals.

By acting on the screws 22a, 22b, an action which is allowed only to someone who has the proprietary wrench, the movement of the second ring 8 can be locked with respect to the whole of the rest of the device in both directions, allowing the technician to unscrew the device from the inlet of the tank if for example it should be necessary for maintenance.

Since an ill-intentioned individual cannot act on the screws 22a, 22b, he/she will not be allowed to remove the removal prevention device from the anti-siphoning device.

Thus it has been found that the invention fully achieves the intended aim and objects, a device being devised which, associated detachably or otherwise with an anti-siphoning device for conventional tanks, simultaneously makes it possible to prevent the fraudulent removal thereof.

Obviously, the invention is susceptible of numerous modifications and variations, all of which are within the scope of the appended claims.

Where technical features mentioned in any claim are followed by reference signs, those reference signs have been included for the sole purpose of increasing the intelligibility of the claims and accordingly, such reference signs do not have any limiting effect on the interpretation of each element identified by way of example by such reference signs.

## Claims

1. A removal prevention device (1) for anti-siphoning devices (1a) for tanks (2), which comprises a second ring (4) which is provided with an axial tube (7) and with which a third ring (8) can be associated which can be coupled to said tank (2), **characterized in that** said second ring (4) has an annular guide (12), concentric to said axial tube (7), on which at least one slider (13a, 13b) slides, oscillating with respect to a pivot (17a, 17b) associated with said third ring (8), there being, adjacent to said annular guide (12), at least one first seat (19a, 19b) for the temporary engagement of said at least one slider (13a, 13b) and at least one second seat (21a, 21b) for an elastically deformable element (20a, 20b) which protrudes within said annular guide (12), one or more screws (22a, 22b) being associated radially with said second ring (4) and affecting or not affecting said annular guide (12).

2. The removal prevention device (1) according to claim 1, comprising a first ring (3), which is annular and axially perforated and is associated, or rendered integral so as to constitute a single element, with an underlying second ring (4), which is substantially T-shaped, is perforated axially and is provided with a first head (5) from the perimetric rim of which a wall (6) and said axial tube (7) protrude, on the opposite side with respect to said first ring (3), a T-shaped third ring (8) being associated with said second ring (4) and comprising a second head (9) which can be associated internally with said wall (6) and a threaded stem (10) which is arranged concentrically to said axial tube (7), **characterized in that** said second ring (4) has, at the inner surface of said first head (5) which is directed toward said third ring (8), an annular guide (12) on which a pair of sliders (13a, 13b) slide.

3. The removal prevention device (1) according to claims 1 and 2, **characterized in that** an annular ridge (14) protrudes, concentrically and externally with respect to said annular guide (12), from said inner surface of said first head (5) so as to define, together with said outer lateral surface of said axial tube (7), a guided path within which each one of said sliders (13 a, 13b) can lie.

4. The removal prevention device (1) according to one or more of the preceding claims, **characterized in that** each one of said sliders (13a, 13b) is substantially shaped like a parallelepiped with a modest length and a width that is smaller than that of said annular guide (12) and with rounded ends (15), a first through hole (16) being provided in each one of said sliders (13a, 13b) at right angles to the surface that slides on said annular guide (12) and acting as a seat for a pivot (17a, 17b) for the pivoting of said sliders (13a, 13b) at adapted second holes (18) which are provided at the underlying flat surface of said second head (9) of said third ring (8).

5. The removal prevention device (1) according to one or more of the preceding claims, **characterized in that** each one of said sliders (13a, 13b) is allowed to oscillate at said annular guide (12), said ends (15) being allowed to be kept adjacent to said annular ridge (14) or one of them being allowed to be distanced from it and to be arranged adjacent to the outer lateral surface of said axial tube (7).

6. The removal prevention device (1) according to one or more of the preceding claims, **characterized in that** at the inner lateral surface of said annular ridge (14) there is a pair of first seats (19a, 19b) for temporary engagement of one of said ends (15) of said sliders (13a, 13b), the shape of said pair of first seats (19a, 19b) being such that one of said ends (15) of said sliders (13a, 13b) is forced into them following a clockwise rotation imparted to said second ring (4).

7. The removal prevention device (1) according to one or more of the preceding claims, **characterized in that** a pair of elastically deformable elements (20a, 20b) contribute to forcing the placement of said ends (15) of said sliders (13a, 13b) into said first seats (19a, 19b) and are constituted by rings made of plastic material which can be accommodated at adapted second seats (21a, 21b) which are provided at said annular ridge (14) in a region adjacent to said first ends (15), the shape of said second seats (21a, 21b) and of said elastically deformable elements (20a, 20b) being such that the latter, once inserted in said second seats (21a, 21b), protrude from them to affect part of the space that lies above said annular guide (12) on which said sliders (13a, 13b) slide.

8. The removal prevention device (1) according to one or more of the preceding claims, **characterized in that** upon a counterclockwise rotation of said second ring (4), said pair of sliders (13a, 13b) which are pivoted to said third ring (8) is free to slide at said annular guide (12), whereas upon a clockwise rotation of said second ring (4) the presence of said elastically deformable elements (20a, 20b) forces one of said ends (15) of each one of said sliders (13a, 13b) to be arranged towards the inner lateral surface of said annular ridge (14) until it affects one of the first seats (19a, 19b), thus blocking a further rotation and allowing the screwing of an anti-siphoning device to the inlet of the tank.

9. The removal prevention device (1) according to one or more of the preceding claims, **characterized in that** one or more screws (22a, 22b) are associated radially, at third holes (30a, 30b), at the outer lateral surface of said second ring (4), and are provided with a proprietary head and have a length such that they can arrange one of their ends beyond said annular ridge (14) so as to affect the space of said annular guide (12) and prevent a complete rotation of said second ring (4), thus blocking the free sliding of said sliders (13a, 13b) in order to allow the unscrewing of an anti-siphoning device (1a) from said inlet of the tank (2) only by authorized personnel equipped with a wrench in order to act on said one or more screws (22a, 22b) which are provided with a proprietary head.

## Patentansprüche

1. Eine Entfernungsverhinderungsvorrichtung (1) für Absaugschutzvorrichtungen (1a) für Tanks, die einen zweiten Ring (4) umfasst, der mit einem axialen Rohr (7) ausgestattet ist und mit dem ein dritter Ring (8) verbunden sein kann, der mit dem Tank (2) gekoppelt werden kann; **dadurch gekennzeichnet, dass** der zweite Ring (4) eine Ringführung (12), konzentrisch mit dem axialen Rohr (7), hat, auf der mindestens ein Schieber (13a, 13b) gleitet, oszillierend mit Bezug auf einen Drehzapfen (17a, 17b), der mit dem dritten Ring (8) verbunden ist, wobei angrenzend an die Ringführung (12) mindestens ein erster Sitz (19a, 19b) für den temporären Eingriff des mindestens einen Schiebers (13a, 13b) und mindestens ein zweiter Sitz (21a, 21b) für ein elastisch verformbares Element (20a, 20b) vorhanden sind, das in die Ringführung (12) hineinragt, wobei eine oder mehrere Schrauben (22a, 22b) radial mit dem zweiten Ring (4) verbunden sind und die Ringführung (12) beeinflussen oder nicht beeinflussen.

2. Die Entfernungsverhinderungsvorrichtung (1) gemäß Anspruch 1, die einen ersten Ring (3) umfasst, der ringförmig und axial perforiert und mit einem darunter liegenden zweiten Ring (4) verbunden oder integral damit ist, um ein einziges Element zu bilden; wobei der zweite Ring im Wesentlichen T-förmig, axial perforiert und mit einem ersten Kopf (5) versehen ist, aus dessen Umfangsrand eine Wand (6) und das axiale Rohr (7) herausragen, wobei auf der dem ersten Ring (3) gegenüberliegenden Seite ein T-förmiger dritter Ring (8) mit dem zweiten Ring (4) verbunden ist und einen zweiten Kopf (9), welcher innen mit der Wand (6) verbunden werden kann, und einen Gewindeschaft (10) umfasst, der konzentrisch mit dem axialen Rohr (7) angeordnet ist; **dadurch gekennzeichnet, dass** der zweite Ring (4) an der Innenfläche des ersten Kopfs (5), die zu dem dritten Ring (8) hin gerichtet ist, eine Ringführung (12) hat, auf der ein Paar von Schiebern (13a, 13b) gleitet.

3. Die Entfernungsverhinderungsvorrichtung (1) gemäß den Ansprüchen 1 und 2, **dadurch gekennzeichnet, dass** ein ringförmiger Grat (14), konzentrisch und außen mit Bezug auf die Ringführung (12), aus der Innenfläche des ersten Kopfs (5) herausragt, um, gemeinsam mit der äußeren Seitenfläche des axialen Rohrs (7), einen geführten Pfad zu bestimmen, in dem jeder der Schieber (13a, 13b) liegen kann.

4. Die Entfernungsverhinderungsvorrichtung (1) gemäß einem oder mehreren der obigen Ansprüche, **dadurch gekennzeichnet, dass** jeder der Schieber (13a, 13b) im Wesentlichen wie ein Parallelepiped mit moderater Länge und einer Breite geformt ist, die geringer ist als diejenige der Ringführung (12), und mit gerundeten Enden (15), wobei eine erste Durchgangsbohrung (16) in jedem der Schieber (13a, 13b) in rechten Winkeln zu der Oberfläche angebracht ist, die auf der Ringführung (12) gleitet, und als Sitz für einen Drehzapfen (17a, 17b) dient, zur gelenkigen Verbindung der Schieber (13a, 13b) in geeigneten zweiten Bohrungen (18) dient, die in der darunter liegenden flachen Oberfläche des zweiten Kopfs (9) des dritten Rings (8) angebracht sind.

5. Die Entfernungsverhinderungsvorrichtung (1) gemäß einem oder mehreren der obigen Ansprüche, **dadurch gekennzeichnet, dass** es jedem der Schieber (13a, 13b) möglich ist, an der Ringführung (12) zu oszillieren, wobei die Enden (15) angrenzend an den ringförmigen Grat (14) gehalten werden können oder einer von ihnen beabstandet von ihm und angrenzend an die äußere Seitenfläche des axialen Rohrs (7) angeordnet sein kann.

6. Die Entfernungsverhinderungsvorrichtung (1) gemäß einem oder mehreren der obigen Ansprüche, **dadurch gekennzeichnet, dass** sich an der inneren Seitenfläche des ringförmigen Grats (14) ein Paar erster Sitze (19a, 19b) für den temporären Eingriff eines der Enden (15) der Schieber (13a, 13b) befindet, wobei die Form des Paares erster Sitze (19a, 19b) derart ist, dass eines der Enden (15) der Schieber (13a, 13b) nach einer Drehung im Uhrzeigersinn, in die der zweite Ring (4) versetzt wird, in sie hineingedrückt wird.

7. Die Entfernungsverhinderungsvorrichtung (1) gemäß einem oder mehreren der obigen Ansprüche, **dadurch gekennzeichnet, dass** ein Paar elastisch verformbarer Elemente (20a, 20b) zur Forcierung der Positionierung der Enden (15) der Schieber (13a, 13b) in die ersten Sitze (19a, 19b) beiträgt und aus Ringen besteht, die aus Kunststoffmaterial hergestellt sind und in geeignete zweite Sitze (21a, 21b) eingeführt werden können, welche an dem ringförmigen Grat (14) in einem Bereich angebracht sind, der an die ersten Enden (15) angrenzt, wobei die Form der zweiten Sitze (21a, 21b) und der elastisch verformbaren Elemente (20a, 20b) derart ist, dass Letztere, sobald sie in die zweiten Sitze (21a, 21b) eingeführt wurden, aus ihnen herausragen, um einen Teil des Raums, der sich oberhalb der Ringführung (12) befindet, auf der die Schieber (13a, 13b) gleiten, zu beeinflussen.

8. Die Entfernungsverhinderungsvorrichtung (1) gemäß einem oder mehreren der obigen Ansprüche, **dadurch gekennzeichnet, dass** bei einer Drehung des zweiten Rings (4) gegen den Uhrzeigersinn das Paar von Schiebern (13a, 13b), die gelenkig mit dem dritten Ring (8) verbunden sind, frei ist, um auf der Ringführung (12) zu gleiten, während bei einer Drehung des zweiten Rings (4) im Uhrzeigersinn die Anwesenheit der elastisch verformbaren Elemente (20a, 20b) eines der Enden (15) jedes der Schieber (13a, 13b) zur inneren Seitenfläche des ringförmigen Grats (14) drückt, bis es einen der ersten Sitze (19a, 19b) beeinflusst, wodurch eine weitere Drehung blockiert und das Aufschrauben einer Absaugschutzvorrichtung auf den Einlass des Tanks ermöglicht wird.

9. Die Entfernungsverhinderungsvorrichtung (1) gemäß einem oder mehreren der obigen Ansprüche, **dadurch gekennzeichnet, dass** eine oder mehrere Schrauben (22a, 22b) radial an dritten Bohrungen (30a, 30b) an der äußeren Seitenfläche des zweiten Rings (4) angebracht und mit einem proprietären Kopf versehen sind und eine solche Länge haben, dass eines ihrer Enden hinter dem ringförmigen Grat (14) angeordnet werden kann, um so den Raum der Ringführung (12) zu beeinflussen und eine vollständige Drehung des zweiten Rings (4) zu verhindern, wodurch das freie Gleiten der Schieber (13a, 13b) blockiert wird, um das Abschrauben einer Absaugschutzvorrichtung (1a) vom Einlass des Tanks (2) nur durch befugtes Personal zuzulassen, das mit einem Schraubenschlüssel ausgestattet ist, um an den einen oder mehreren Schrauben (22a, 22b) zu arbeiten, die mit einem proprietären Kopf versehen sind.

## Revendications

1. Dispositif anti-retrait (1) destiné à des dispositifs anti-siphonnement (1a) pour des réservoirs (2), le dispositif comprenant une seconde bague (4) qui est pourvue d'un tube axial (7) et à laquelle peut être associée une troisième bague (8) qui peut être couplée audit réservoir (2), **caractérisé en ce que** ladite seconde bague (4) présente un guide annulaire (12), qui est concentrique par rapport audit tube axial (7), guide annulaire, sur lequel coulisse au moins un coulisseau (13a, 13b) en oscillant par rapport à un pivot (17a, 17b) associé à ladite troisième bague (8), au moins un premier siège (19a, 19b) pour l'accouplement temporaire dudit au moins un coulisseau (13a, 13b) et au moins un second siège (21a, 21b) pour un élément élastiquement déformable (20a, 20b) qui fait saillie à l'intérieur dudit guide annulaire (12) étant prévus de façon adjacente audit guide annulaire (12), une ou plusieurs vis (22a, 22b) affectant ou n'affectant pas ledit guide annulaire (12) étant associées radialement à ladite seconde bague (4).

2. Dispositif anti-retrait (1) suivant la revendication 1, le dispositif comprenant une première bague (3) qui est de forme annulaire, perforée axialement et associée à une bague sous-jacente (4) ou rendue solidaire de celle-ci, de manière à former une seule pièce avec elle, ladite bague sous-jacente (4) étant essentiellement en forme de T, perforée axialement et pourvue d'une première tête (5), depuis le bord périmétrique de laquelle font saillie une paroi (6) et ledit tube axial (7), sur le côté opposé par rapport à la première bague (3), une troisième bague en forme de T (8) étant associée à ladite seconde bague (4), troisième bague, qui comprend une seconde tête (9) qui peut être associée, à l'intérieur, à ladite paroi (6) et à une tige filetée (10) qui est disposée concentriquement par rapport audit tube axial (7), **caractérisé en ce que** ladite second bague (4) présente, sur la surface intérieure de ladite première tête (5) qui est orientée vers ladite troisième bague (8), un guide annulaire (12) sur lequel coulisse une paire de coulisseaux (13a, 13b).

3. Dispositif anti-retrait (1) suivant les revendications 1 et 2, **caractérisé en ce qu'**une arête annulaire (14) fait saillie concentriquement à l'extérieur par rapport audit guide annulaire (12) depuis la surface intérieure de ladite première tête (5), de manière à définir, avec ladite surface latérale extérieure dudit tube axial (7), une trajectoire guidée, dans laquelle peut coulisser chacun desdits deux coulisseaux (13a, 13b).

4. Dispositif anti-retrait (1) suivant une ou plusieurs des revendications précédentes, **caractérisé en ce que** chacun desdits coulisseaux (13a, 13b) est essentiellement en forme de parallélépipède avec une longueur modeste et une largeur qui est inférieure à celle dudit guide annulaire (12) et avec des extrémités arrondies (15), un premier trou débouchant (16) étant prévu dans chacun desdits coulisseaux (13a, 13b) à des angles droits par rapport à la surface qui coulisse sur ledit guide annulaire (12), ledit premier trou débouchant agissant comme un siège pour un pivot (17a, 17b) pour le pivotement desdits coulisseaux (13a, 13b) au niveau de seconds trous adaptés (18) qui sont prévus dans la surface plane sous-jacente de ladite seconde tête (9) de ladite troisième bague (8).

5. Dispositif anti-retrait (1) suivant une ou plusieurs des revendications précédentes, **caractérisé en ce que** chaque coulisseau (13a, 13b) peut osciller au niveau dudit guide annulaire (12), lesdites extrémités (15) pouvant être maintenues adjacentes à ladite arête annulaire (14) ou l'une d'elles peut en être écartée et disposée adjacente à la surface latérale extérieure dudit tube axial (7).

6. Dispositif anti-retrait (1) suivant une ou plusieurs des revendications précédentes, **caractérisé en ce que** la surface latérale intérieure de ladite arête annulaire (14) présente une paire de premiers sièges (19a, 19b) pour un accouplement temporaire d'une desdites extrémités (15) desdits coulisseaux (13a, 13b), la forme de ladite paire de premiers sièges (19a, 19b), étant telle qu'une desdites extrémités (15) desdits coulisseaux (13a, 13b) y soit forcée à la suite d'une rotation dans le sens des aiguilles d'une montre transmise à ladite seconde bague (4).

7. Dispositif anti-retrait (1) suivant une ou plusieurs des revendications précédentes, **caractérisé en ce qu'**une paire d'éléments élastiquement déformables (20a, 20b) contribue à forcer lesdites extrémités (15) desdits coulisseaux (13a, 13b) dans lesdits premiers sièges (19a, 19b), éléments élastiquement déformables, qui sont constitués de bagues réalisées en matière artificielle qui peuvent être logées et adaptées aux seconds sièges (21a, 21b) qui sont prévus au niveau de l'arête annulaire (14) dans une zone adjacente auxdites premières extrémités (15), la forme desdits seconds sièges (21a, 21b) et desdits éléments élastiquement déformables (20a, 20b) étant telle que ces derniers, une fois insérés dans lesdits seconds sièges (21a, 21b) fassent saillie depuis ceux-ci pour occuper une partie de l'espace situé au-dessus du guide annulaire (12), sur lequel coulissent lesdits coulisseaux (13a, 13b).

8. Dispositif anti-retrait (1) suivant une ou plusieurs des revendications précédentes, **caractérisé en ce que**, suite à une rotation dans le sens contraire des aiguilles d'une montre de ladite seconde bague (4), ladite paire de coulisseaux (13a, 13b) qui sont pivotés vers ladite troisième bague (8), est libre de coulisser dans ledit guide annulaire (12), alors que, suite à une rotation dans le sens des aiguilles d'une montre de ladite seconde bague (4), la présence desdits éléments élastiquement déformables (20a, 20b) force une desdites extrémités (15) de chacun desdits coulisseaux (13a, 13b) vers la surface latérale intérieure de ladite arête annulaire (14) jusqu'à ce qu'elle occupe un des premiers sièges (19a, 19b), empêchant, ainsi, une autre rotation et permettant le vissage d'un dispositif anti-siphonnement sur l'entrée du réservoir.

9. Dispositif anti-retrait (1) suivant une ou plusieurs des revendications précédentes, **caractérisé en ce qu'**une ou plusieurs vis (22a, 22b) sont associées radialement à des troisièmes trous (30a, 30b), au niveau de la surface latérale extérieure de ladite seconde bague (4), et pourvues d'une tête propriétaire, et **en ce qu'**elles présentent une longueur telle qu'une de leurs extrémités puisse s'avancer sous ladite arête annulaire (14) de manière à occuper l'espace dudit guide annulaire (12) et empêcher une rotation complète de ladite seconde bague (4), empêchant, ainsi, le libre coulissement desdits coulisseaux (13a, 13b) de manière à permettre le dévissage d'un dispositif anti-siphonnement (1a) de ladite entrée du réservoir (2) uniquement par un personnel autorisé équipé d'une clé de sorte à agir sur lesdites une ou plusieurs vis (22a, 22b) qui sont pourvues d'une tête propriétaire.
